# EUROPÄISCHE PATENTANMELDUNG

(11) **EP 3 546 899 A1**
(43) Veröffentlichungstag der Anmeldung: **02.10.2019**
(21) Anmeldenummer: 19166033.1
(22) Anmeldetag: 29.03.2019
(51) Int. Cl.: G01G 19/52, A45C 11/00

(54) **ANORDNUNG ZUR GEWICHTSKRAFTMESSUNG**

(30) Priorität: 30.03.2018 DE 202018001675 U; 21.09.2018 DE 202018105433 U
(71) Anmelder: Huber, Tanja, 84518 Garching (DE)
(72) Erfinder: Huber, Tanja, 84518 Garching (DE)
(74) Vertreter: Schaumburg und Partner Patentanwälte mbB

(57) **Zusammenfassung**

Die Erfindung betrifft eine Anordnung zur Gewichtskraftmessung mit einem mobilen Endgerät (30) und mit einer Schutzhülle (100,200), die zumindest einen Bereich des mobilen Endgeräts (30) umgibt. Die Schutzhülle (100,200) umfasst mindestens eine Sensoreinheit (10) zum Ermitteln eines Messwerts einer auf die Schutzhülle (100,200) wirkenden Gewichtskraft. Die Sensoreinheit (10) und das mobile Endgerät (30) sind über eine Datenübertragungsverbindung (40) zum Übertragen eines ermittelten Messwerts miteinander verbunden.

## Beschreibung

Die Erfindung betrifft eine Anordnung zur Gewichtskraftmessung, mit einem mobilen Endgerät und mit einer Schutzhülle, die zumindest einen Bereich des mobilen Endgeräts umgibt.

Aus dem Stand der Technik sind Waagen, insbesondere Nahrungsmittelwaagen, bekannt, die mit mobilen Endgeräten kommunizieren können. Diese Waagen können eigenständige Einheiten sein, oder in separate Einheiten, wie beispielsweise in Küchengeräten, integriert sein. Ein Benutzer kann einen Messwert dieser Waagen auf einem mobilen Endgerät auslesen. Nachteilig daran ist aber, dass der Benutzer keinen mobilen Zugriff auf die Waagen hat.

Eine denkbare Lösung könnte darin bestehen, das mobile Endgerät selbst als Waage zu nutzen.

Es ist Aufgabe der Erfindung eine kompakte, tragbare, einfach zu realisierende und sichere Anordnung zur Gewichtskraftmessung anzugeben, auf die der Benutzer auf einfache Weise mobil zugreifen kann.

Diese Aufgabe wird durch eine Anordnung mit den Merkmalen des Anspruchs 1 gelöst. Vorteilhafte Weiterbildungen ergeben sich aus den abhängigen Ansprüchen.

Bei der Anordnung nach Anspruch 1 umfasst die Schutzhülle eine Sensoreinheit zum Ermitteln eines Messwerts einer auf die Schutzhülle wirkenden Gewichtskraft. Die Sensoreinheit und das mobile Endgerät sind über eine Datenübertragungsverbindung zum Übertragen eines ermittelten Messwerts miteinander verbunden. Dadurch wird eine Anordnung zur Gewichtskraftmessung erreicht, die auf einfache Weise transportierbar ist und auf die ein Benutzer jederzeit zugreifen kann. Ferner wird durch die Schutzhülle eine Schutzfunktion erreicht.

Es ist besonders vorteilhaft, wenn die Sensoreinheit mindestens einen Kraftsensor, insbesondere eine Wägezelle, eine Kraftmessdose und/oder einen Dehnmessstreifen umfasst. Dadurch wird eine besonders zuverlässige Ermittlung des Messwerts erreicht.

Ferner ist vorteilhaft, wenn das mobile Endgerät eine Auswerteeinheit zum Verarbeiten eines von der Sensoreinheit zum mobilen Endgerät übermittelten Messwerts umfasst. Dadurch wird erreicht, dass die Messdaten einem Benutzer auf einfache Weise zur Verfügung gestellt werden können.

Es ist vorteilhaft, wenn das mobile Endgerät ein Smartphone, ein Tablet-Computer oder ein tragbarer Computer ist. Dadurch wird erreicht, dass die Anordnung für gängige mobile Kommunikationsmittel anwendbar ist und somit für eine Vielzahl von Benutzern verfügbar ist.

In einer vorteilhaften Ausführungsform umgibt die Schutzhülle das mobile Endgerät derart, dass mindestens eine Oberfläche des Endgeräts, insbesondere ein Display, nicht von der Schutzhülle bedeckt wird. Dadurch wird eine besonders einfache Handhabung der Anordnung erreicht.

In einer alternativen vorteilhaften Ausführungsform ist ein Abdeckelement der Schutzhülle aufklappbar, sodass ein offener Betriebszustand und ein geschlossener Betriebszustand der Schutzhülle möglich sind. Dadurch wird eine besonders sichere Anordnung, insbesondere im geschlossenen Betriebszustand der Schutzhülle erreicht.

Ferner ist es vorteilhaft, wenn der Kraftsensor in einer Ebene, vorzugsweise zwischen gegenüberliegenden Oberflächen der Schutzhülle angeordnet ist. Insbesondere umfasst die Schutzhülle ein Stabilitätselement, vorzugsweise ein steife Platte, wodurch die Wägefunktion auch auf Auflageflächen mit Unebenheiten bis zu +/- 8% genutzt werden kann. Dadurch ist ein besonders flexibler Einsatz der Anordnung möglich.

In einer besonders vorteilhaften Ausführungsform, erfolgt die Datenübertragungsverbindung zwischen der Sensoreinheit und dem mobilen Endgerät über ein Signal- und/oder über ein Netzwerkkabel. Dadurch wird eine besonders sichere und zuverlässige Datenübertragung erreicht.

In einer alternativen vorteilhaften Ausführungsform erfolgt die Datenübertragungsverbindung über eine drahtlose Datenübertragungsverbindung, insbesondere über WLAN, Bluetooth, Infrarotem Licht oder NFC. Dadurch sind eine besonders einfache Handhabung und ein flexibler Einsatz der Anordnung möglich.

Besonders vorteilhaft ist es, wenn der Messbereich der Sensoreinheit 0 g bis 5.000 g, insbesondere 1 g bis 2.000 g beträgt. Dadurch kann ein breites Spektrum von Gegenständen des täglichen Gebrauchs gewogen werden.

In einer vorteilhaften Ausführungsform vergleicht die Auswerteeinheit den Messwert mit einem voreingestellten Sollwert. Eine Ausgabeeinheit des mobilen Endgeräts gibt ein erstes Signal aus, wenn der Messwert dem Sollwert entspricht und/oder die Ausgabeeinheit gibt ein zweites Signal aus, wenn der Messwert vom Sollwert abweicht. Dadurch wird eine besonders intuitive Bedienung der Anordnung erreicht.

Ferner ist es vorteilhaft, wenn das erste Signal und/oder das zweite Signal ein akustisches Signal und/oder ein optisches Signal ist. Besonders vorteilhaft ist es, wenn das erste Signal ein Dauerton ist und wenn das zweite Signal ein an- und abschwellender Ton oder eine Tonfolge mit einer ersten Wiederholfrequenz ist, wobei die Wiederholfrequenz mit Annäherung zum Sollwert insbesondere zunimmt. Somit kann der Benutzer über die Wiederholfrequenz über eine Annährung zum Sollwert akustisch informiert werden.

Weitere Merkmale und Vorteile der Erfindung ergeben sich aus der folgenden Beschreibung, die die Erfindung im Zusammenhang mit den beigefügten Figuren anhand eines Ausführungsbeispiels näher erläutert.

Es zeigt:
- Fig. 1: eine Schnittdarstellung der erfindungsgemäßen Schutzhülle,
- Fig. 2: eine Seitenansicht der Schutzhülle nach Figur 1 in einem ersten Betriebszustand gemäß einer ersten Ausführungsform der Erfindung,
- Fig. 3: eine Seitenansicht der Schutzhülle nach Figur 2 in einem zweiten Betriebszustand,
- Fig. 4: eine Draufsicht auf eine erfindungsgemäße Schutzhülle gemäß einer zweiten Ausführungsform, und
- Fig. 5: eine weitere Draufsicht auf die Schutzhülle nach Figur 4.

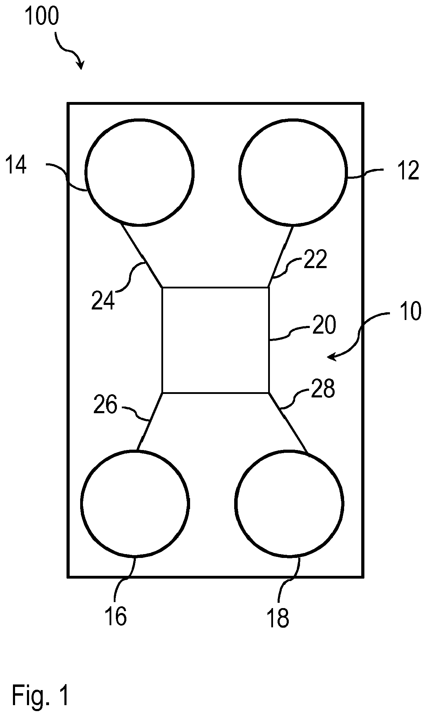

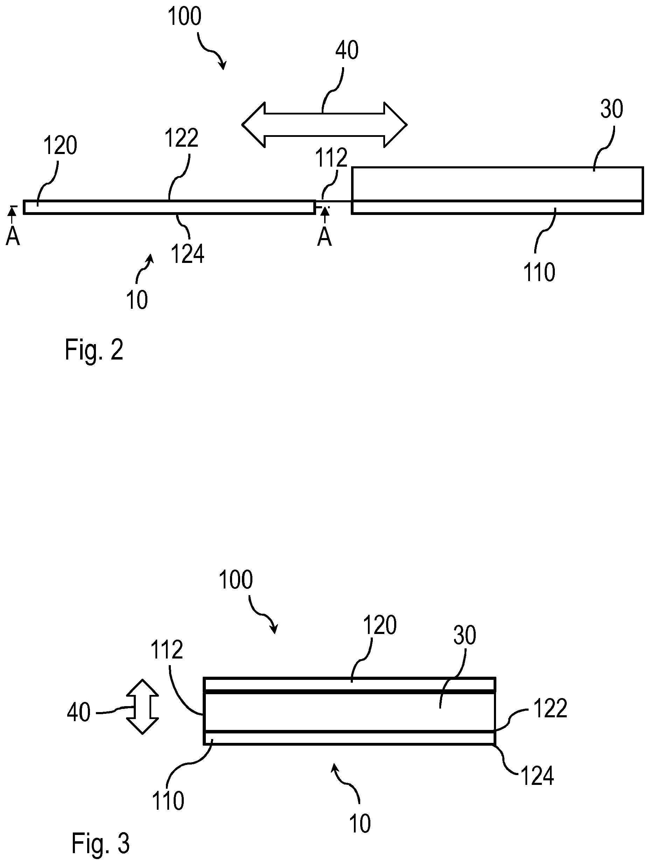

Figur 1 zeigt eine Schnittdarstellung einer erfindungsgemäßen Schutzhülle 100 entlang der in Figur 2 gezeigten Schnittlinie A-A. Die Schutzhülle 100 umfasst eine Sensoreinheit 10 mit vier Wägezellen 12 bis 18, die über elektrische Leitungen 22 bis 28 mit einer Verarbeitungseinheit 20 verbunden sind. Die Wägezellen 12 bis 18 enthalten jeweils einen Federkörper, dessen Geometrie sich unter Einwirkung einer Gewichtskraft verändert. Die elastische Verformung des Federkörpers wird von Dehmessstreifen erfasst und in ein elektrisches Signal umgewandelt. Die elektrischen Signale der Wägezellen 12 bis 18 werden über die elektrischen Leitungen 22 bis 28 an die Verarbeitungseinheit 20 übertragen. Die Verarbeitungseinheit 20 wertet die elektrischen Signale aus und sendet einen Messwert der auf die Schutzhülle 100 wirkenden Gewichtskraft über eine Datenübertragungsverbindung an ein mobiles Endgerät. Die Datenübertragungsverbindung und das mobile Endgerät sind in Figur 2 dargestellt.

Figur 2 zeigt eine Seitenansicht der Schutzhülle 100 in einem ersten Betriebszustand. Die Schutzhülle 100 umfasst ein aufklappbares Abdeckelement 120 und einen Grundkörper 110, in welchem das mobile Endgerät 30 aufgenommen ist. Das Abdeckelement 120 und der Grundkörper 110 sind über ein Verbindungselement 112 miteinander verbunden, das in der Ausführungsform nach Figur 2 als Filmscharnier ausgebildet ist. Bei anderen Ausführungsformen kann auch eine andere Verbindung vorgesehen sein. Die Sensoreinheit 10 ist in dem Abdeckelement 120 zwischen zwei gegenüberliegenden Oberflächen 122, 124 angeordnet, sodass ein zu wägendes Objekt auf dem Abdeckelement 120 abgelegt werden kann. Der Pfeil 40 zeigt die Datenübertagungsverbindung zwischen der Sensoreinheit 10 der Schutzhülle 100 und dem mobilen Endgerät 30. Die Daten werden insbesondere über eine drahtlose Datenübertragungsverbindung 40, beispielsweise über WLAN, Bluetooth, Infrarotem Licht oder NFC übertragen.

Das mobile Endgerät 30 umfasst eine nicht dargestellte Auswerteeinheit, die den von der Sensoreinheit 10 übertragenen Messwert auswertet. Die Auswerteeinheit vergleicht den Messwert insbesondere mit einem voreingestellten Sollwert. Ferner umfasst das mobile Endgerät 30 eine nicht dargestellte Ausgabeeinheit, die ein erstes akustisches Signal und/oder ein erstes optisches Signal ausgibt, wenn der Messwert dem voreingestellten Sollwert entspricht. Weicht der Messwert von dem voreingestellten Sollwert ab, gibt die Ausgabeeinheit ein zweites akustisches Signal und/oder ein zweites optisches Signal aus.

Das erste akustische Signal ist in einer bevorzugten Ausführungsform insbesondere ein Dauerton und das zweite akustische Signal ist ein ab-und abschwellender Ton oder eine Tonfolge mit einer ersten Wiederholfrequenz, wobei die Wiederholfrequenz mit Annäherung zum Sollwert zunimmt. In einer weiteren vorteilhaften Ausführungsform kann das akustische Signal auch eine akustische Sprachausgabe sein. In einer weiteren vorteilhaften Ausführungsform der Erfindung kann eine Anwendungssoftware auf dem mobilen Endgerät 30 installiert sein und genutzt werden, um die vorab beschriebenen Funktionalitäten bereitzustellen oder zu unterstützen.
Das zu wägende Objekt ist in einer bevorzugten Ausführungsform ein Nahrungsmittel. Die Auswerteieinheit verarbeitet die Informationen zum Messwert des Nahrungsmittels mit voreingestellten Gewichts-Sollwerten des Nahrungsmittels, die beispielsweise zur Realisierung eines Kochrezepts vorgegeben sind.

In einer weiteren vorteilhaften Ausführungsform kann der Benutzer der Auswerteeinheit weitere Eingabedaten zur Verfügung stellen. Diese Eingabedaten können insbesondere das Alter, das Gewicht, die sportlichen Aktivitäten, Lebensmittelunverträglichkeiten und vorbestimmte Diätziele und Diätformen eines Benutzers umfassen. In Abhängigkeit des Messwerts des Nahrungsmittels und der Eingabedaten gibt die Auswerteeinheit eine Sprach- oder Textmeldung aus, die dem Benutzer mitteilt, wie viele Kalorien an einem Tag noch zugeführt werden können, um ein vorbestimmtes Diät-Ziel zu erreichen.

Figur 3 zeigt eine Seitenansicht der Schutzhülle 100 in einem zweiten Betriebszustand. Elemente mit gleicher Funktion bzw. gleichem Aufbau haben dasselbe Bezugszeichen. Das Abdeckelement 120 ist in der Darstellung nach Figur 3 geschlossen, sodass ein zu wägender Gegenstand auf dem Abdeckelement 120 abgelegt werden kann.

In einer alternativen Ausführungsform ist die Sensoreinheit 10 in dem Grundkörper 110 angeordnet. In einer weiteren alternativen Ausführungsform ist die Schutzhülle ferner ohne Abdeckelement 120 ausgebildet, sodass mindestens eine Oberfläche des mobilen Endgeräts (30), insbesondere ein Display, nicht von der Schutzhülle 100 bedeckt wird.

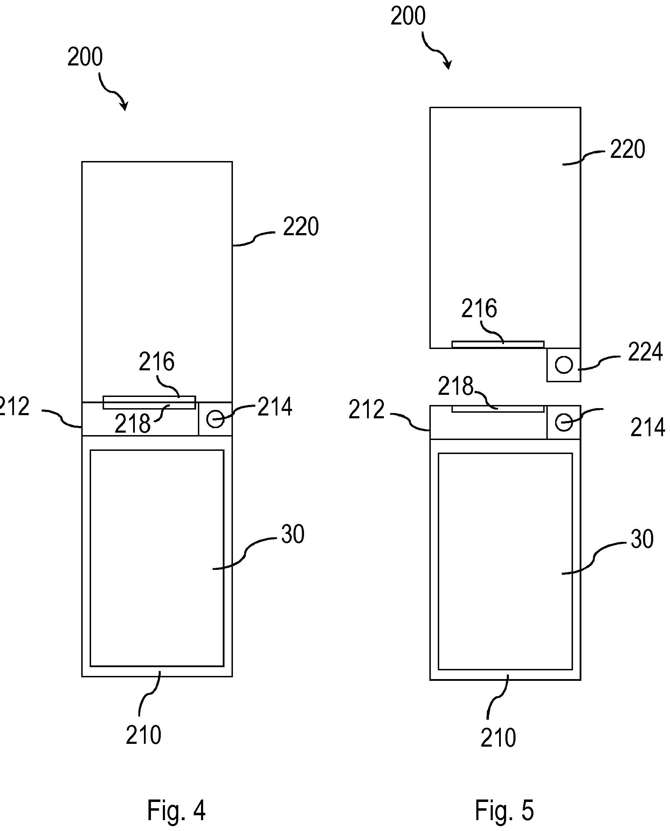

Die Figuren 4 und 5 zeigen eine erfindungsgemäße Schutzhülle 200 gemäß einer zweiten Ausführungsform. Das Verbindungselement 212 ist mit dem Grundkörper 210 verbunden und umfasst ein drehbares Rastelement 214, das mit einem entsprechenden Gegenstück 224 des Abdeckelements 220 verbunden ist. Das Rastelement 214 und das Gegenstück 224 können insbesondere einen Druckknopf bilden, der zerstörungsfrei lösbar ist und eine Drehung des Abdeckelements 220 um eine durch den Druckknopf festgelegte Drehachse relativ zum Grundkörper ermöglicht. In einer alternativen Ausführungsform sind das Rastelement 214 und das Gegenstück 224 nicht zerstörungsfrei lösbar. Bei der Ausführungsform nach den Figuren 4 und 5 wird erreicht, dass das Abdeckelement 220 während des Wägevorgangs gegenüber dem Grundkörper 210 verschwenkt werden kann, sodass eine hohe Flexibilität im Einsatz der Anordnung erreicht wird.

Ferner können in dem Abdeckelement 220 ein erster Magnet 216 und in dem Verbindungselement 212 ein zweiter Magnet 218 angeordnet sein, die aufeinander eine Anziehungskraft ausüben und sicherstellen, dass das Abdeckelement 220 im geschlossenen Zustand der Schutzhülle 200 auf eine vorbestimmte, schutzmaximierende Weise auf der Oberseite des mobilen Endgeräts 30 angeordnet ist. In einer weiteren alternativen Ausführungsform der Erfindung kann ein Magnet 216, 218 durch ein ferromagnetisches Metallelement ersetzt werden.

## Patentansprüche

1. Anordnung zur Gewichtskraftmessung,
mit einem mobilen Endgerät (30) und
mit einer Schutzhülle (100,200), die zumindest einen Bereich des mobilen Endgeräts (30) umgibt,
**dadurch gekennzeichnet,**
**dass** die Schutzhülle (100,200) mindestens eine Sensoreinheit (10) zum Ermitteln eines Messwerts einer auf die Schutzhülle (100,200) wirkenden Gewichtskraft umfasst, und
**dass** die Sensoreinheit (10) und das mobile Endgerät (30) über eine Datenübertragungsverbindung (40) zum Übertragen eines ermittelten Messwerts miteinander verbunden sind.

2. Anordnung nach Anspruch 1, **dadurch gekennzeichnet, dass** die Sensoreinheit (10) mindestens einen Kraftsensor (12 bis 18), insbesondere eine Wägezelle, eine Kraftmessdose und/oder einen Dehnmessstreifen umfasst.

3. Anordnung nach einem der vorhergehenden Ansprüche, **dadurch gekennzeichnet, dass** das mobile Endgerät (30) eine Auswerteeinheit zum Verarbeiten eines von der Sensoreinheit (10) zum mobilen Endgerät (30) übermittelten Messwerts umfasst.

4. Anordnung nach einem der vorhergehenden Ansprüche, **dadurch gekennzeichnet, dass** das mobile Endgerät (30) ein Smartphone, ein Tablet-Computer oder ein tragbarer Computer ist.

5. Anordnung nach einem der vorhergehenden Ansprüche, **dadurch gekennzeichnet, dass** die Schutzhülle (100,200) das mobile Endgerät (30) derart umgibt, dass die Schutzhülle (100,200) mindestens eine Oberfläche des Endgeräts (30), insbesondere ein Display, nicht bedeckt.

6. Anordnung nach einem der Ansprüche 1 bis 4, **dadurch gekennzeichnet, dass** ein Abdeckelement (120, 220) der Schutzhülle (100,200) aufklappbar ist, sodass ein offener Betriebszustand und ein geschlossener Betriebszustand der Schutzhülle (100, 200) möglich sind.

7. Anordnung nach einem der Ansprüche 2 bis 6, **dadurch gekennzeichnet,**
**dass** die Schutzhülle (100, 200) mindestens einen ersten Kraftsensor (12, 14) und mindestens einen zweiten Kraftsensor (16, 18) umfasst,
**dass** der erste Kraftsensor (12, 14) und der zweite Kraftsensor (16, 18) in einer Ebene, vorzugsweise zwischen gegenüberliegenden Oberflächen (122, 124) der Schutzhülle (100, 200) angeordnet ist.

8. Anordnung nach einem der vorhergehenden Ansprüche, **dadurch gekennzeichnet, dass** die Datenübertragungsverbindung (40) zwischen der Sensoreinheit (10) und dem mobilen Endgerät (30) über ein Signal- und/oder über ein Netzwerkkabel erfolgt.

9. Anordnung nach einem der Ansprüche 1 bis 7, **dadurch gekennzeichnet, dass** die Datenübertragungsverbindung (40) über eine drahtlose Datenübertragungsverbindung, insbesondere über WLAN, Bluetooth, Infrarotem Licht oder NFC, erfolgt.

10. Anordnung nach einem der vorhergehenden Ansprüche, **dadurch gekennzeichnet, dass** der Messbereich de Sensoreinheit (10) 0 g bis 5.000 g, insbesondere 1 g bis 2.000 g beträgt.

11. Anordnung nach einem der Ansprüche 3 bis 10, **dadurch gekennzeichnet, dass** die Auswerteeinheit den Messwert mit einem voreingestellten Sollwert vergleicht und dass eine Ausgabeeinheit des mobilen Endgeräts (30) ein erstes Signal ausgibt, wenn der Messwert dem Sollwert entspricht und/oder dass die Ausgabeeinheit ein zweites Signal ausgibt, wenn der Messwert vom Sollwert abweicht.

12. Anordnung nach Anspruch 11, **dadurch gekennzeichnet, dass** das erste Signal und/oder das zweite Signal ein akustisches Signal und/oder ein optisches Signal ist.

13. Anordnung nach Anspruch 12, **dadurch gekennzeichnet, dass** das erste akustische Signal ein Dauerton ist und dass das zweite akustische Signal ein an- und abschwellender Ton oder eine Tonfolge mit einer ersten Wiederholfrequenz ist, wobei die Wiederholfrequenz mit Annäherung zum Sollwert insbesondere zunimmt.
